# EUROPEAN PATENT APPLICATION

(11) **EP 0 571 344 A1**
(43) Date of publication of application: **24.11.1993**
(21) Application number: 93830216.3
(22) Date of filing: 20.05.1993
(51) Int. Cl.: B28D 1/12, B23B 27/16

(54) **Device for clamping an exchangeable cutting bit for machining stone-like materials**

(30) Priority: 21.05.1992 IT LU920006 U
(71) Applicant: Polidori, Cesare, I-55010 Lunata Capannori (Lucca) (IT)
(72) Inventor: Polidori, Cesare, I-55010 Lunata Capannori (Lucca) (IT)
(74) Representative: Fiammenghi-Domenighetti, Delfina

(57) **Abstract**

The clamping device employs a screw (4) provided with a flange (5), which is positioned obliquely, and the flange (5) is in abutment with a point (6) on the cutting portion and with a recess (7) which is provided on the tool (3) on the opposite side with respect to said point (6).

The screw (4) does not pass through the removable cutting portion and its loosening allows a quick replacement of the cutting portion.

## Description

The present invention relates to the field of tooling stone-like materials, and it suggests a new method for clamping the removable cutting portions on the tool's body, so that it becomes possible to clamp said removable cutting portions, in an extremely easy way, safely and quickly.

Said tools and the corresponding removable cutting portions, are mountable on chains of swinging arms of self-propelled machines, employed in quarries, etc.

So far, we know different kinds of tools used for tooling stone, marble, etc., whose removable cutting portion is generally clamped on the tool's body by means of a screw located perpendicularly with respect to the bearing plane and the removable cutting portion. Said screw is usually introduced in a through hole obtained in the cutting portion, and hence inside a threaded hole on the body of the tool, thereby allowing the clamping of the removable cutting portion.

Therefore, if it is necessary to replace the removable cutting portion, the operation of removal and clamping, will involve very long time intervals and long stopping periods of the machine.

The present invention will now be described according to a preferred embodiment given for illustrative and not limitative purposes.

In the drawings:
Fig. 1 is a lateral partially sectional view of the object of the present Invention, showing how the clamping is obtained;
Fig. 2 is a front perspective view of the tool, with the removable cutting portion effecting the clamping, according to the method of the invention.

With reference to the Figs., they show the simplicity of the method according to which a removable cutting portion 1 is clamped and constantly stressed, without resorting to welding or screwing.

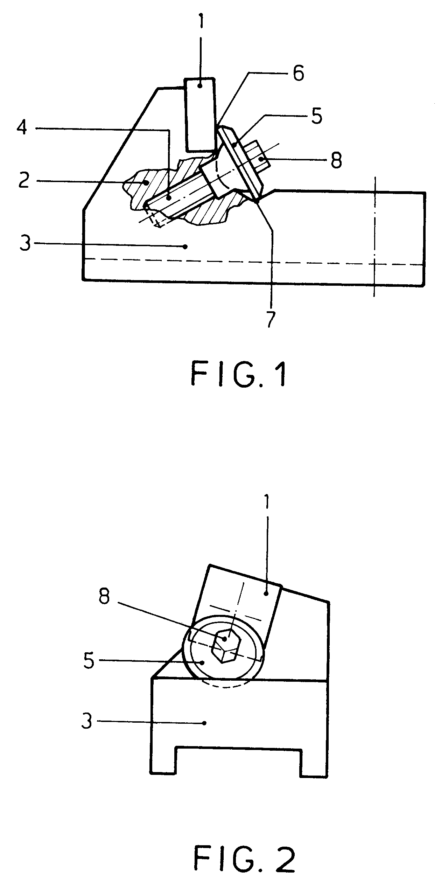

In fact we see in the two Figs. 1 and 2, and in particular by means of the partial section 2, that the new clamping method of the removable cutting portion 1 to the body of the tool 3, consists in positioning along an inclined axis forming an adequate angle, a screw 4 whose head 5 acts as a clamping member on the insert 1. Its clamping is therefore obtained by means of the head 5 of the screw 4 which acts only so as to press against the contact points 6 and 7. In particular, the insert 1 is held in the operating position by means of the screw 4 provided with a flange 5, positioned obliquely in order to penetrate inside the body of the tool 3 wihout passing through the removable cutting portion 1, so that the flange will be in abutment with point 6 of the cutting portion 1 and with a suitable recess 7 provided on the opposite side in the body of the tool 3 itself.

The release and the clamping of the screw 4 is obtained by engagement of the hexagonal element 8 with a wrench, and the hexagonal element could also be provided inside the head; therefore, once the screw has been loosened the removable cutting portion itself is free and can be removed and replaced with a new cutting portion which will be inserted and clamped both easily and safely by means of a few turns of the screw.

As regards the conventional removable cutting portions, the cutting portion of the present invention is designed in such a way as to create a gap between the horizontal surface on which the recess 7 is provided and the cutting portion 1 itself, and in said gap the screw 4 will be introduced.

The description and the drawings are only illustrative and not limitative and will cover also analogous embodiments of the above clarified principle.

## Claims

1. Method for clamping the removable cutting portions on the body of the tools used for tooling stone-like materials, characterized in that the removable cutting portion (1) is held in the operating position by a screw (4) provided with a flange (5) positioned obliquely so as to penetrate inside the tool's body without passing through the removable cutting portion (1), so that the flange will be in abutment with point (6) of the removable cutting portion and with a suitable recess (7) provided on the opposite side on the cutting portion itself.

2. Method for clamping the removable cutting portions on the body of the tools used for tooling stone-like materials according to claim 1, characterized in that the release and removing operations in order to replace the cutting portion (1) are made possible by loosening the screw (4), without the need to completely unscrew the same, by simply acting with a wrench on an hexagonal element (8) which is made integral with the head of the screw (4).
